# EUROPEAN PATENT APPLICATION

(11) **EP 3 778 720 A1**
(43) Date of publication of application: **17.02.2021**
(21) Application number: 19776299.0
(22) Date of filing: 04.02.2019
(51) Int. Cl.: C08J 3/12

(54) **PRODUCTION METHOD FOR CRUMBS AND PRODUCTION METHOD FOR BALE**

(30) Priority: 28.03.2018 JP 2018062960
(71) Applicant: Zeon Corporation, Tokyo 100-8246 (JP)
(72) Inventor: NAKAMURA, Masao, Tokyo 100-8246 (JP)
(74) Representative: Gerauer, Marc Philippé
(86) International application number: PCT/JP2019/003893
(87) International publication number: WO 2019/187638

(57) **Abstract**

The present invention relates to a method for producing crumbs having a step of supplying a rubber solution and superheated steam to hot water flowing in a predetermined direction to bring the rubber solution and the superheated steam into contact with each other.

## Description

### TECHNICAL FIELD

The present invention relates to a method for producing rubber crumbs and a method for producing rubber bales.

### BACKGROUND OF THE INVENTION

Conventionally, a steam stripping method has been known as a method for producing crumbs (see, for example, Patent Document 1).

Specifically, after a rubber solution and highpressure and high-temperature steam are supplied into hot water and a solvent contained in the rubber solution is removed, that is, a desolvation is carried out, a hot water slurry in which crumbs are dispersed is formed. Next, when hot water is separated from the hot water slurry using a screen, crumbs are formed. The crumbs are then dehydrated, dried and then molded into a bale.

### RELATED-ART DOCUMENT

### Patent Documents

Patent document 1: Japanese Unexamined Patent Publication No. 2003-144958

### SUMMARY OF THE INVENTION

### Problems to be Solved by the Invention

However, in the conventional method, there is a problem that adhering of rubber crumbs to a screen causes bale coloring, along with clogging of the screen. It is considered that this is because of a high volatile content and a high adhesiveness of rubber crumbs. Specifically, as crumbs having a large amount of volatile content tend to adhere to a screen, clogging of the screen results. Further, when the crumbs are dried, the crumbs having a large amount of volatile content are easily attached to a dryer, so that a rubber constituting crumbs is thermally deteriorated and the bale is colored.

An aspect of the present invention is to provide a method for producing crumbs capable of suppressing clogging of a screen and suppressing coloring of bales.

### Means for Solving the Problems

In one aspect of the present invention, the method for producing crumbs includes a step of supplying a rubber solution and superheated steam to hot water flowing in a predetermined direction to bring the rubber solution and the superheated steam into contact with each other.

The hot water preferably contains a dispersant.

It is preferable that the hot water is flowing in the horizontal direction, the rubber solution is supplied in the vertical direction, and the superheated steam is supplied in the horizontal direction.

The superheated steam preferably has a temperature of 140 to 300°C and a pressure of 0.4 to 10 MPa.

The hot water preferably has a temperature of 80°C or higher and a flow velocity of 0.1 to 10 m/s.

In another aspect of the present invention, a method for producing bales includes a step of producing crumbs using the above-described method for producing crumbs.

### EFFECT OF THE INVENTION

According to one aspect of the present invention, a method for producing crumbs capable of suppressing clogging of a screen and suppressing coloring of bales can be provided.

### BRIEF DESCRIPTION OF THE DRAWINGS

[FIG.1] FIG.1 is a schematic diagram which shows an example of the crumb producing apparatus used when producing crumbs.
[FIG.2A] FIG.2A is a side-view schematic diagram which shows an example of the nozzle of FIG.1.
[FIG.2B] FIG.2B is a rear-view schematic diagram which shows an example of the nozzle of FIG. 1.
[FIG.3] FIG.3 is a side-view schematic diagram which shows a modification example of the nozzle of FIG.1.

### DETAILED DESCRIPTION

Hereinafter, embodiments for carrying out the present invention will be described.

### <Method for Producing Crumbs>

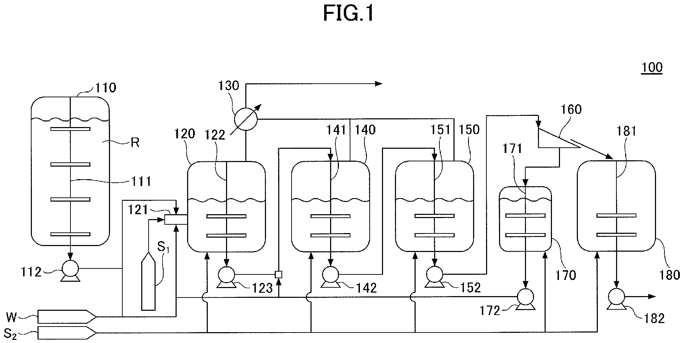

As an example of the method for producing crumbs according to the present embodiment, a method for producing crumbs containing rubber using the crumb producing apparatus 100 (see FIG. 1) will be described.

First, a known solution polymerization method is used to polymerize a monomer being a constituent unit of rubber to prepare a rubber solution R.

The rubber is not particularly limited. However, the examples of the rubbers include acrylic rubber, isoprene rubber, styrene-butadiene rubber (SBR), low cis butadiene rubber, high cis butadiene rubber, high trans butadiene rubber, styrene-isoprene rubber, butadiene-isoprene rubber, styrene-isoprene-butadiene rubber, ethylene-propylene-diene rubber, styrene-acrylonitrile-butadiene rubber, acrylonitrile-butadiene rubber, polyisoprene-SBR block copolymer, polystyrene-polybutadiene-polystyrene triblock copolymer, epichlorohydrin rubber, fluorine rubber, silicone rubber, ethylene-propylene rubber, and urethane rubber.

The rubber may have its end terminal or molecular chain modified with at least one modifying group such as an amino group, a hydroxyl group, an alkoxysilyl group, and a silanol group.

Next, the rubber solution R is transferred to the rubber solution tank 110. Here, the viscosity may be adjusted by adding a solvent to the rubber solution before being transferred to the rubber solution tank 110. If the dispersibility of the rubber in the hot water described below is low, the dispersant described below may be added to the rubber solution R.

The rubber solution transferred to the rubber solution tank 110 is agitated by the stirrer 111 provided in the rubber solution tank 110 as needed.

Next, the rubber solution R, the superheated steam S₁, and the hot water W are supplied to the nozzle 121 provided on the side of the desolvation tank 120. At this time, the rubber solution R is supplied from the bottom of the rubber solution tank 110 by the pump 112.

The superheated steam S₁ is high-temperature steam generated by heating saturated steam.

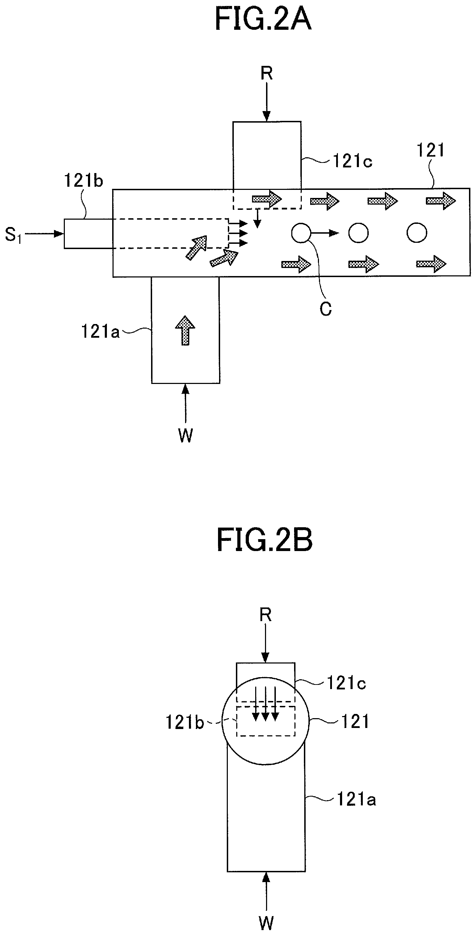

FIG. 2A and 2B show an example of the nozzle 121. FIG. 2A and 2B are a side view and a rear view, respectively.

The nozzle 121 has a bottom surface provided with a hot water supply part 121a, a side surface provided with a superheated steam supply part 121b, and a top surface provided with a rubber solution supply part 121c.

The hot water W is supplied from the hot water supply part 121a to the inside of the nozzle 121 in the vertical direction (upward in the figure) and then flows in the horizontal direction (rightward in the figure).

In the present specification and claims, the horizontal direction means a range of ±10° in the horizontal direction.

The superheated steam S₁ is supplied from the superheated steam supply part 121b to the hot water W flowing in the horizontal direction inside the nozzle 121 in the direction in which the hot water W is flowing (rightward in the figure). As a result, the moving speed of the generated crumb C increases, and the crumbs C are less likely to collide with each other. As a result, coalescence of the crumb C can be suppressed.

The rubber solution R is supplied from the rubber solution supply part 121c into the hot water W flowing in the horizontal direction inside the nozzle 121 in the vertical direction with respect to the flowing direction of the hot water W (downward in the figure). As a result, the rubber solution R and the superheated steam S₁ come into contact with each other in the hot water W flowing in the horizontal direction to form a crumb C, and a slurry in which the crumb C is dispersed is generated. Therefore, it is possible to suppress the generation of clogging of a screen and suppress the coloring of a bale. It is considered that this is because the volatile content of the crumb C can be reduced. As a result, the crumb C is less likely to adhere to the screen. Further, when the crumb C is dried, the crumb C is less likely to adhere to a dryer, and the rubber contained in the crumb C is less likely to be thermally deteriorated.

In addition, the flowing direction of the hot water W and the supplying direction of the superheated steam S₁ and the rubber solution R are not particularly limited as long as the rubber solution R and the superheated steam S₁ are brought into contact with each other in the flowing hot water W.

For example, the superheated steam S₁ may be supplied in an acute angle direction with respect to the flowing direction of the hot water W.

Further, the rubber solution R may be supplied in an acute angle direction with respect to the direction in which the hot water W is flowing. As a result, the moving speed of the generated crumbs C are further increased, and the crumb C are less likely to collide with each other. As a result, coalescence of the crumbs C can be further suppressed.

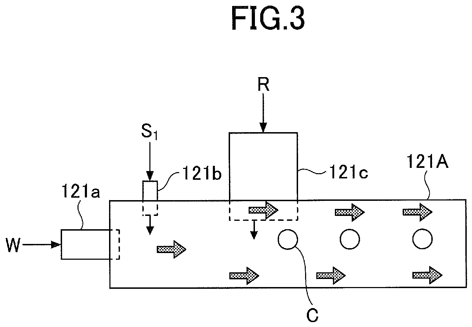

FIG. 3 shows a modification example of the nozzle 121.

The nozzle 121A has the same configuration as the nozzle 121 except that a hot water supply part 121a is provided on the side surface and a superheated steam supply part 121b and a rubber solution supply part 121c are provided on the top surface.

The hot water W is supplied from the hot water supply part 121a into the nozzle 121 in the horizontal direction (rightward in the figure), and then flows in the horizontal direction (rightward in the figure).

The superheated steam S₁ is supplied vertically (downward in the figure) from the superheated steam supply part 121b into the hot water W flowing in the horizontal direction inside the nozzle 121.

The rubber solution R is vertically (downward in the figure) supplied from the rubber solution supply part 121c into the hot water W flowing in the horizontal direction inside the nozzle 121. As a result, the rubber solution R and the superheated steam S₁ are brought into contact with each other in the hot water W flowing in the horizontal direction to form crumb C, and a slurry in which the crumb C is dispersed is generated.

The temperature of the superheated steam S₁ is preferably 140 to 300°C, more preferably 180 to 250°C, and particularly preferably 190 to 220°C. When the temperature of the superheated steam S₁ is 140°C or higher, the generation of clogging of the screen can be suppressed and the coloring of the bale can be suppressed. On the other hand, when the temperature of the superheated steam S₁ is 300°C or lower, the coloring of the bale can be suppressed and the cost can be reduced from the viewpoint of the heat-resistant design of the crumb producing apparatus 100.

The pressure of the superheated steam S₁ is preferably 0.4 to 10 MPa, more preferably 0.9 to 3 MPa, and particularly preferably 1 to 2 MPa. When the pressure of the superheated steam S₁ is 0.4 MPa or more, the generation of clogging of the screen can be suppressed and the coloring of the bale can be suppressed. On the other hand, when the pressure of the superheated steam S₁ is 10 MPa or less, the cost can be reduced from the viewpoint of pressure resistance design of the crumb producing apparatus 100.

The flow velocity of the hot water W is preferably 0.1 to 10 m/s, more preferably 0.5 to 3 m/s, and particularly preferably 0.5 to 1 m/s. When the flow velocity of the hot water W is 0.1 m/s or more, the generation of clogging of the screen can be suppressed and the coloring of the bale can be suppressed. On the other hand, when the flow velocity of the hot water W is 10 m/s or less, the cost can be reduced from the viewpoint of the design of the crumb producing apparatus 100.

The flow velocity of the hot water W is obtained by dividing the supply amount of the hot water W per unit time by the cross-sectional area of the nozzle 121.

The temperature of the hot water W is preferably 70°C or higher, and more preferably 80°C or higher. When the temperature of the hot water W is 70°C or higher, the generation of clogging of the screen can be suppressed and the coloring of the bale can be suppressed.

The upper limit of the temperature of the hot water W is not particularly limited, but it is preferably 120°C or lower.

The hot water W preferably contains a dispersant. As a result, the generation of clogging of the pipe that transfers the desolvated slurry from the bottom of the desolvation tank 120 to the top of the desolvation tank 140 can be suppressed.

Here, when the hot water W contains a dispersant having a cloud point, the temperature of the hot water W is preferably equal to or higher than the cloud point of the dispersant.

The content of the dispersant in the hot water W is preferably 2 to 70 ppm, more preferably 3 to 40 ppm. When the content of the dispersant in the hot water W is 2 ppm or more and 70 ppm or less, the generation of clogging of the pipe for transferring the desolvated slurry from the bottom of the desolvation tank 120 to the top of the desolvation tank 140 can be further suppressed.

As the dispersant, a nonionic surfactant, an anionic surfactant, a cationic surfactant, an amphoteric surfactant or the like can be used.

Examples of the nonionic surfactant include block copolymers of two or more kinds of alkylene oxides such as oxyethyleneoxypropylene block copolymers; polyoxyalkylene ether compounds such as polyoxyethylene lauryl ether, polyoxyethylene cetyl ether, polyoxyethylene stearyl ether, polyoxyethylene oleyl ether, polyoxyethylene octylphenyl ether, and polyoxyethylene nonylphenyl ether, in which alkyleneoxide is polyadded to higher alcohols having 5 to 50 carbon atoms such as lauryl alcohol, cetyl alcohol, stearyl alcohol, and oleyl alcohol, alkylphenols such as octylphenol, isooctylphenol, and nonylphenol, and alkylnaphthols such as butylnaphthol and octylnaphthol; polyoxyalkylene glycol fatty acid ester compounds such as polyoxyethylene glycol monolaurate, polyoxyethylene glycol monopalmitate, polyethylene glycol monostearate, polyethylene glycol distearate, and polyethylene glycol monooleate, in which alkyleneoxide is polyadded to higher fatty acids having 5 to 50 carbon atoms such as lauric acid, palmitic acid, stearic acid, and oleic acid; polyhydric alcohol fatty acid ester compounds such as glyceryl monostearate, glyceryl monooleate, sorbitan monolaurate, sorbitan monopalmitate, sorbitan monostearate, sorbitan distearate, sorbitan tristearate, sorbitan monooleate, sorbitan dioleate, mannitan monolaurate, mannitan monostearate, mannitan distearate, mannitan monooleate, hextan monolaurate, hextan monopalmitate, hextan monostearate, hextan distearate, hextan tristearate, hextan monooleate, and hextan dioleate, in which the compounds are esters of polyhydric alcohol having 3 or more hydroxyl groups in the molecule such as glycerin, pentaerythritol, sorbitan, mannitane, hextan, and polycondensates thereof and higher fatty acids having 5 to 50 carbon atoms; polyoxyalkylene polyhydric alcohol fatty acid ester compounds such as polyoxyethylene sorbitan monolaurate, polyoxyethylene sorbitan monostearate, polyoxyethylene sorbitan distearate, polyoxyethylene sorbitan monooleate, polyoxyethylene mannitan monopalmitate, polyoxyethylene mannitan monostearate, polyoxyethylene mannitane monooleate, polyoxyethylene hextan monolaurate, and polyoxyethylene hextan monostearate, in which alkylene oxide is polyadded to the polyhydric alcohol fatty acid ester compounds; polyoxyalkylene alkylamine compounds such as polyoxyethylene stearyl amine and polyoxyethylene oleyl amine; and alkylalkanolamide compounds.

Among these, polyoxyalkylene compounds such as block copolymers of two or more types of alkylene oxides, polyoxyalkylene ether compounds, polyoxyalkylene glycol fatty acid ester compounds, polyoxyalkylene polyhydric alcohol fatty acid ester compounds, and polyoxyalkylene alkylamine compounds are preferably used. Also, oxyethyleneoxypropylene block copolymer, polyoxyethylene lauryl ether, polyoxyethylene stearyl ether, polyoxyethylene nonylphenyl ether, polyethylene glycol monostearate, polyoxyethylene sorbitan monostearate, and polyoxyethylene stearylamine are particularly preferably used.

Examples of the anionic surfactant include carboxylates such as aliphatic monocarboxylates, polyoxyethylene alkyl ether carboxylates, N-acyl sarcosinates and N-acyl glutamate, sulfonates such as dialkyl sulfosuccinates, alkyl sulfonates, α-olefin sulfonates, linear alkylbenzene sulfonates, branched-chain alkylbenzene sulfonates, naphthalene sulfonate-formaldehyde condensates, alkylnaphthalene sulfonates, and N-methyl-N-acyl taurates, sulfate ester salts such as alkyl sulfates, polyoxyalkyl ether sulfates, and fat and oil sulfates, and phosphate esters such as alkyl phosphates, polyoxyethylene alkyl ether phosphates, and polyoxyethylene alkylphenyl ether phosphates.

Examples of cationic surfactants include monoalkylamine salts, dialkylamine salts, trialkylamine salts, alkyltrimethylammonium chloride, alkyltrimethylammonium bromide, alkyltrimethylammonium iodide, dialkyldimethylammonium chloride, dialkyldimethylammonium bromide, dialkyldimethylammonium iodide, and alkylbenzalkonium chloride.

Examples of the amphoteric surfactants include alkyl dimethylamino acetic acid betaine, alkyl dimethyl acetic acid betaine, alkyl dimethyl carboxymethyl betaine, alkyl dimethyl carboxy methylene ammonium betaine, alkyl dimethyl ammonioacetate, fatty acid amidepropyl dimethyl amino acid betaine, alkyloylamide propyl dimethylglycine, alkyloylamide propyl dimethyl ammonioacetate, 2-alkyl-1-(2-hydroxyethyl)imidazolinium-1-acetate, alkyldiamino ethylglycine, dialkyldiamino ethylglycine, and alkyldimethyl amineoxide.

The dispersants may be used alone or in combination of two or more.

The content of rubber in the rubber solution R is not particularly limited, but is preferably 10 to 50% by mass.

Next, the slurry in which the crumb C is dispersed, which is generated in the nozzle 121, is transferred to the desolvation tank 120. At this time, the heat retaining steam S₂ is supplied in the vertical direction (upward in the figure) from the bottom of the desolvation tank 120 while stirring the slurry transferred to the desolvation tank 120 by using the stirrer 122 so as to remove the solvent by the steam stripping method. As a result, a portion of the volatile organic compounds (solvents, unreacted monomers, etc.) contained in the slurry in which the crumb C is dispersed evaporate.

Here, after the volatile organic compounds evaporated by removing the solvent are condensed using the condenser 130, the solvent is recovered and reused as needed.

The temperature of the heat retaining steam S₂ is not particularly limited, but is preferably 100 to 190°C.

The pressure of the heat retaining steam S₂ is not particularly limited, but is preferably 0.1 to 1 MPa.

Next, the desolvated slurry is transferred from the bottom of the desolvation tank 120 to the top of the desolvation tank 140 by the pump 123. At this time, the heat retaining steam S₂ is supplied in the vertical direction (upward in the figure) from the bottom of the desolvation tank 140 while stirring the slurry transferred to the desolvation tank 140 by using the stirrer 141 so as to remove the solvent by the steam stripping method. As a result, a portion of the volatile organic compounds contained in the slurry in which the crumb C is dispersed evaporates.

Here, after the volatile organic compounds evaporated by removing the solvent are condensed using the condenser 130, the solvent is recovered and reused as needed.

Next, the desolvated slurry is transferred from the bottom of the desolvation tank 140 to the top of the desolvation tank 150 by the pump 142. At this time, the heat retaining steam S₂ is supplied in the vertical direction (upward in the figure) from the bottom of the desolvation tank 150 while stirring the slurry transferred to the desolvation tank 150 by using the stirrer 151 so as to remove the solvent by the steam stripping method. As a result, the rest of the volatile organic compounds contained in the slurry in which the crumb C is dispersed evaporates, and a hot water slurry in which the crumb C is dispersed is generated.

Here, after the volatile organic compounds evaporated by removing the solvent are condensed using the condenser 130, the solvent is recovered and reused as needed.

Note that the number of desolvation tanks is not limited to three, and the number of desolvation tanks can be appropriately changed to a number that can sufficiently remove the volatile organic compounds contained in the slurry in which the crumb C is dispersed.

Next, the hot water slurry is transferred from the bottom of the desolvation tank 150 to the screen 160 by the pump 152, and the hot water slurry is separated into serum water (hot water) and crumb C. As a result, the serum water is collected in the serum water tank 170 and the crumb C is collected in the crumb tank 180.

Here, the serum water collected in the serum water tank 170 is transferred from the bottom of the serum water tank 170 by using the pump 172 while being stirred using the stirrer 171 as needed, and the serum water is reused by mixing the hot water W.

The inclination angle of the screen 160 is not particularly limited, but is preferably 30 to 75°.

Further, the crumb C collected in the crumb tank 180 is transferred from the bottom portion of the crumb tank 180 by using the pump 182 while being stirred using the stirrer 181 as needed, and the crumb C is used for the production of the bale.

### <Method for Producing Bale>

The bale contains rubber and the bale can be produced by a known method using the crumb C produced by the method for producing crumbs according to the present embodiment.

For example, the crumb C is dehydrated, dried, and then molded using a mold having a predetermined shape to produce a bale.

Here, the crumb C may be crushed and then dehydrated.

As the dehydrator used for dehydrating the crumb C, for example, a screw press type dehydrator can be used.

As a dryer for drying the dehydrated crumb C, for example, an expansion type extrusion dryer or a vibration dryer can be used.

As a molding machine for molding the dried crumb C, a known molding machine can be used.

### EXAMPLES

Examples of the present invention will be described below, but the present invention is not limited to these examples.

Crumbs and bales were produced by the method described below and evaluated by the following methods.

### [Clogging of transfer pipes]

The liquid surface of the desolvation tank 120 was visually observed to detect clogging of the transfer pipe (a pipe for transferring the desolvated slurry from the bottom of the desolvation tank 120 to the top of the desolvation tank 140). At this time, clogging of the transfer pipe can be detected by the rise of the liquid level in the desolvation tank 120. The clogging of the transfer pipe was determined according to the following criteria.
×: The transfer pipe was clogged 8 times or more a day on average.
Δ: The transfer pipe was clogged 3 times or more and less than 8 times a day on average.
○: The transfer pipe was clogged 0.5 times or more and less than 3 times a day on average.
⊚: The transfer pipe was clogged less than 0.5 times a day on average.

### [Screen clogging]

Clogging of the screen 160 was visually evaluated. Clogging of the screen 160 was determined according to the following criteria.
×: A deposit was formed on the screen 160 due to the attachment of crumb C on the screen.
Δ: The screen 160 was mostly clogged.
○: The screen 160 was partially clogged.
⊚: The screen 160 was hardly clogged.

### [Bale coloring]

The appearance of the bale was visually inspected to evaluate the number of colored foreign substances on the bale. The colored foreign substances on the bale was determined according to the following criteria.
1: The number of colored foreign substances on bales per hour was 100 or more on average.
2: The number of colored foreign substances on bales per hour was 50 or more and less than 100 on average.
3: The number of colored foreign substances on bales per hour was 30 or more and less than 50 on average.
4: The number of colored foreign substances on bales per hour was 10 or more and less than 30 on average.
5: The number of colored foreign substances on bales per hour was less than 10 on average.

### [Amount of residual solvent in bale]

The amount of residual solvent in the bale was measured using headspace type gas chromatography in accordance with ASTM D1416 Standard Test Methods for Rubber from Synthetic Sources-Chemical Analysis. Specifically, after the sample was put in a vial, the sample in the vial was held at 160°C for 30 minutes to quantify the amount of solvent in the volatile content, and the amount of residual solvent was determined. An FID detector was used as the detector.

### [Volatile content of bale]

The volatile content of the bale was measured according to the method A described in JIS H6238-2 Raw material rubber - How to determine volatile content (quantitative) - Part 2, the automatic infrared dry thermogravimetric method.

### [Preparation of butadiene rubber solution]

18.8 t of a mixed solvent of cyclohexane and butane in a mass ratio of 70:30 and 2.5 t of 1,3-butadiene were inputted into approximately 47 m³ of a reaction vessel equipped with a jacket, a cooler, and a stirrer, and the mixture was stirred and mixed. Next, 30 mol of n-butyllithium was added while stirring the mixed solution in the reaction vessel, and then polymerization was initiated at 50°C. Here, 1,3-butadiene was obtained by removing 4-t-butylcatechol (TBC) as a polymerization inhibitor. After 40 minutes from the start of the polymerization, when the temperature reached 80°C, 2.5 t of 1,3-butadiene was continuously added over 30 minutes. Next, when the polymerization conversion rate exceeded 99%, 3 mol of tin tetrachloride was added and stirred for 5 minutes, then 16 mol of N-phenyl-2-pyrrolidone was added and reacted for 5 minutes to obtain a polymerization solution.

The polymerization solution was transferred from the reaction vessel to the rubber solution tank 110 of the crumb producing apparatus 100 (see FIG. 1). Here, in the course of transferring the polymerization solution, 30 mol of methanol was added to stop the polymerization, and then 0.3 phr of a stabilizer Irganox 1520L (manufactured by BASF) was added to obtain a butadiene rubber solution as a rubber solution R. The rubber solution R had a butadiene rubber content of 21% by mass.

After the rubber solution R was transferred to the rubber solution tank 110, the rubber solution R was stirred using the stirrer 111 and stored in a uniform state.

Here, a small amount of the rubber solution R was sampled, solidified, and then vacuum dried to obtain a butadiene rubber. The 1,2-bond amount of the butadiene rubber was 9% when the amount was measured by FT-IR (solution method). The Mooney viscosity ML1+4 (100°C) of the butadiene rubber was 50.

### [Examples 1 to 3 and Comparative Examples 1 and 2]

### (Production of crumb)

Crumb C was produced by using a crumb producing apparatus 100 (see FIG. 1) and a nozzle 121 having an inner diameter of 8 inches (see FIGS. 2A and 2B).

First, the superheated steam S₁ (or saturated steam), the rubber solution R, and the hot water W were supplied to the nozzle 121 of the desolvation tank 120. Specifically, under the following conditions, the rubber solution R and the superheated steam S₁ were supplied in the vertical direction and the horizontal direction, respectively, into the hot water W flowing in the horizontal direction, so that the rubber solution R and the superheated steam S₁ were brought into contact with each other to obtain a slurry in which crumb C was dispersed (see FIGS. 2A and 2B) .
Supply amount of the rubber solution R per unit time: 19.05 t/h
Temperature of the hot water W: 80°C
Flow velocity of the hot water W: 0.65 m/s
Supply amount of the hot water W per unit time: 75.74 t/h
Content of dispersant in the hot water W: 5 ppm
Dispersant: Polyoxyethylene-polyoxypropylene condensate having a cloud point of 58°C

Here, the temperature of steam [°C], the pressure [MPa], the type, and the supply amount per unit time [t/h] were set to the values described in the steam conditions (see Table 1).

Next, after the slurry in which the crumb C was dispersed was transferred to the desolvation tank 120, the heat retaining steam S₂ having a temperature of 143°C and a pressure of 0.29 MPa was supplied to the tank at 4.5 t/h, and a portion of the solvent was evaporated by the steam stripping method. At this time, the temperature inside the desolvation tank 120 was set to 101°C.

Next, after the slurry in which a portion of the solvent was evaporated was transferred to the desolvation tank 140, the heat retaining steam S₂ was supplied to the tank in the same manner as the desolvation tank 120, and a portion of the solvent was evaporated by the steam stripping method.

Next, after the slurry in which a portion of the solvent was evaporated was transferred to the desolvation tank 150, the heat retaining steam S₂ was supplied to the tank in the same manner as in the desolvation tank 120, and the remaining part of the solvent was evaporated by the steam stripping method. Then, a hot water slurry in which crumb C was dispersed was prepared.

Next, a hot water slurry in which the crumb C was dispersed was separated using a plain weave screen 160 having 0.5 mm openings in which the screen was provided at an inclination angle of 60°. As a result, the serum water was collected in the serum water tank 170 and the crumb C was collected in the crumb tank 180.

### (Production of Bale)

The crumb C collected in the crumb tank 180 was transferred to a plain weave vibrating screen having 0.5 mm openings in which the screen was provided at an inclination angle of 0°. The crumb C was then crushed and dehydrated using a screw press type dehydrator.

Next, the dehydrated crumb C was extruded at 70 rpm and dried using an expansion type extruder having an inner diameter of 14 inches. Here, a die having 60 round-shaped nozzles having a diameter of 9 mm was provided at the exit of the expansion type extrusion dryer, and the extruded crumb C was cut by a cutter rotating at 400 rpm.

Next, the shredded crumb C was dried using a vibration dryer. At this time, the residence time in the vibration dryer was adjusted to be about 5 minutes. Further, the vibration dryer was divided into seven sections, and the temperatures of the seven sections were set to 80°C, 100°C, 100°C, 100°C, 90°C, 80°C, and 40°C in the order in which the shredded crumb C was conveyed.

Next, the dried crumb C was formed into a bale using a rectangular parallelepiped mold.

Table 1 shows the production status of crumbs and the evaluation results of the properties of the bales.

**[Table 1]**

| | | Examples | | | Comparative Examples | |
|---|---|---|---|---|---|---|
| | | 1 | 2 | 3 | 1 | 2 |
| Condition of steam | Temperature[°C] | 190 | 190 | 187 | 143 | 150 |
| | Pressure[MPa] | 0.98 | 1.09 | 0.98 | 0.30 | 0.52 |
| | Type | Superheated steam | | | saturated steam | |
| | Supply amount per unit time [t/h] | 2.1 | 1.9 | 2.2 | 4.8 | 3.6 |
| Production status of crumb | Clogging of transfer pipe | ⊚ | ⊚ | ○ | ○ | × |
| | Clogging of screen | ⊚ | ⊚ | ○ | Δ | × |
| Properties of bale | Colored foreign substances | 4 | 5 | 3 | 1 | 2 |
| | Amount of residual solvent [ppm] | 70 | 30 | 110 | 330 | 150 |
| | Volatile content [mass%] | 0.70 | 0.65 | 0.76 | 0.92 | 0.83 |

Table 1 showed that the generation of clogging of the screen and coloring of the bale were suppressed in Examples 1 to 3.

On the other hand, the generation of clogging of the screen and coloring of the bale were observed in Comparative Examples 1 and 2, since the saturated steam was used in these comparative examples.

### [Preparation of styrene-butadiene rubber solution 1]

19.3 t of a mixed solvent of cyclohexane and butane in a mass ratio of 70:30, 1.28 t of styrene, and 3.22 t of 1,3-butadiene were inputted into approximately 47 m³ of a reaction vessel equipped with a jacket, a cooler, and a stirrer, and the mixture was stirred and mixed. Next, 88 mol of tetramethylethylenediamine (TMEDA) and 45 mol of n-butyllithium were added while stirring the mixed solution in the reaction vessel, and then polymerization was initiated at 40°C. Here, 1,3-butadiene was obtained by removing 4-t-butylcatechol (TBC) as a polymerization inhibitor. After 30 minutes from the start of the polymerization, 0.3 t of styrene and 2.7 t of 1,3-butadiene were continuously added over 60 minutes. When the polymerization conversion rate exceeded 99%, 4.4 mol of tin tetrachloride was added and stirred for 5 minutes, then 31 mol of N-phenyl-2-pyrrolidone was added and reacted for 5 minutes to obtain a polymerization solution.

The polymerization solution was transferred from the reaction vessel to the rubber solution tank 110 of the crumb producing apparatus 100 (see FIG. 1). Here, in the course of transferring the polymerization solution, 88 mol of methanol was added to stop the polymerization. Then, 0.3 phr of a stabilizer Irganox 1520L (manufactured by BASF) and 700 ppm of the dispersant described later were added to the polymerization solution to obtain a styrene-butadiene rubber solution 1 as a rubber solution R. The rubber solution R had a styrene-butadiene rubber content of 28% by mass.

After the rubber solution R was transferred to the rubber solution tank 110, the rubber solution R was stirred using the stirrer 111 and stored in a uniform state.

Here, a small amount of the rubber solution R was sampled, solidified, and then vacuum dried to obtain a styrene-butadiene rubber. The content of the styrene-derived constitutional units and the 1,2-bond amount of the butadiene-derived constitutional units in the styrene-butadiene rubber were 21% and 63%, respectively, when the amounts were measured by FT-IR (Solution method/Hampton method). The Mooney viscosity ML1+4 (100°C) of the styrene-butadiene rubber was 45.

### [Example 4, Comparative Example 3]

### (Production of Crumb)

Crumb C was produced using a crumb producing apparatus 100 (see FIG. 1) and a nozzle 121 having an inner diameter of 8 inches (see FIGS. 2A and 2B).

First, the superheated steam S₁ (or saturated steam), the rubber solution R, and the hot water W were supplied to the nozzle 121 of the desolvation tank 120. Specifically, under the following conditions, the rubber solution R and the superheated steam S₁ were supplied in the vertical direction and the horizontal direction, respectively, into the hot water W flowing in the horizontal direction, so that the rubber solution R and the superheated steam S₁ were brought into contact with each other to obtain a slurry in which crumb C was dispersed (see FIGS. 2A and 2B) .
Supply amount of the rubber solution R per unit time: 14.29 t/h
Temperature of the hot water W: 80°C
Flow velocity of the hot water W: 0.56 m/s
Supply amount of the hot water W per unit time: 65.56 t/h
Content of dispersant in the hot water W: 30 ppm
Dispersant: Polyoxyethylene-polyoxypropylene condensate having a cloud point of 58°C

Here, the temperature of steam [°C], the pressure [MPa], the type, and the supply amount per unit time [t/h] were set to the values described in the steam conditions (see Table 2).

Next, after the slurry in which the crumb C was dispersed was transferred to the desolvation tank 120, the heat retaining steam S₂ having a temperature of 143°C and a pressure of 0.29 MPa was supplied to the tank at 0.3 t/h, and a portion of the solvent was evaporated by the steam stripping method. At this time, the temperature inside the desolvation tank 120 was set to 110°C.

Next, after the slurry in which a portion of the solvent was evaporated was transferred to the desolvation tank 140, the heat retaining steam S₂ was supplied to the tank in the same manner as the desolvation tank 120, and a portion of the solvent was removed by the steam stripping method.

Next, after the slurry in which a portion of the solvent was evaporated was transferred to the desolvation tank 150, the heat retaining steam S₂ was supplied to the tank in the same manner as in the desolvation tank 120, and the residual solvent was evaporated by the steam stripping method. Then, a hot water slurry in which crumb C was dispersed was prepared.

Next, a hot water slurry in which the crumb C was dispersed was separated using a plain weave screen 160 having 0.5 mm openings in which the screen was provided at an inclination angle of 60°. As a result, the serum water was collected in the serum water tank 170 and the crumb C was collected in the crumb tank 180.

### (Production of Bale)

The crumb C collected in the crumb tank 180 was transferred to a plain weave vibrating screen having 0.5 mm openings in which the screen was provided at an inclination angle of 0°. The crumb C was then crushed and dehydrated using a screw press type dehydrator.

Next, the dehydrated crumb C was extruded at 70 rpm and dried using an expansion type extruder having an inner diameter of 14 inches. Here, a die having 60 round-shaped nozzles having a diameter of 9 mm was provided at the exit of the expansion type extrusion dryer, and the extruded crumb C was cut by a cutter rotating at 400 rpm.

Next, the shredded crumb C was dried using a vibration dryer. At this time, the residence time in the vibration dryer was adjusted to be about 5 minutes. Further, the vibration dryer was divided into seven sections, and the temperatures of the seven sections were set to 80°C, 100°C, 100°C, 100°C, 90°C, 80°C, and 40°C in the order in which the shredded crumb C was conveyed.

Next, the dried crumb C was formed into a bale using a rectangular parallelepiped mold.

Table 2 shows the production status of crumbs and the evaluation results of the properties of the bales.

**[Table 2]**

| | | Example | Comparative Example |
|---|---|---|---|
| | | 4 | 3 |
| Condition of steam | Temperature[°C] | 205 | 143 |
| | Pressure[MPa] | 1.09 | 0.3 |
| | Type | Superheated steam | saturated steam |
| | Supply amount per unit time [t/h] | 7.44 | 10.5 |
| Production status of crumb | Clogging of transfer pipe | ⊚ | Δ |
| | Clogging of screen | ⊚ | × |
| Properties of bale | Colored foreign substances | 5 | 2 |
| | Amount of residual solvent [ppm] | 410 | 1200 |
| | Volatile content [mass%] | 0.73 | 0.95 |

Table 2 showed that the generation of clogging of the screen and coloring of the bale were suppressed in Example 4.

On the other hand, the generation of clogging of the screen and coloring of the bale were observed in Comparative Example 3, since the saturated steam was used in this comparative example.

### [Preparation of styrene-butadiene rubber solution 2]

21.3 t of a mixed solvent of cyclohexane and butane in a mass ratio of 70:30, 1.13 t of styrene, and 2.63 t of 1,3-butadiene were inputted into approximately 47 m³ of a reaction vessel equipped with a jacket, a cooler, and a stirrer, and the mixture was stirred and mixed. Next, 15 mol of tetramethylethylenediamine (TMEDA) and 50 mol of n-butyllithium were added while stirring the mixed solution in the reaction vessel, and then polymerization was initiated at 50°C. Here, 1,3-butadiene was obtained by removing 4-t-butylcatechol (TBC) as a polymerization inhibitor. After 30 minutes from the start of the polymerization, 3.75 t of 1,3-butadiene was continuously added over 60 minutes. When the polymerization conversion rate exceeded 99%, 7.0 mol of tin tetrachloride was added and stirred for 5 minutes, then 35 mol of N-phenyl-2-pyrrolidone was added and reacted for 5 minutes to obtain a polymerization solution.

The polymerization solution was transferred from the reaction vessel to the rubber solution tank 110 of the crumb producing apparatus 100 (see FIG. 1). Here, in the course of transferring the polymerization solution, 100 mol of methanol was added to stop the polymerization. Then, 0.3 phr of a stabilizer Irganox 1520L (manufactured by BASF) was added to obtain a styrene-butadiene rubber solution 2 as a rubber solution R. The rubber solution R had a styrene-butadiene rubber content of 26 mass%.

After the rubber solution R was transferred to the rubber solution tank 110, the rubber solution R was stirred using the stirrer 111 and stored in a uniform state.

Here, a small amount of the rubber solution R was sampled, solidified, and then vacuum dried to obtain a styrene-butadiene rubber. The content of the styrene-derived constitutional units and the 1,2-bond amount of the butadiene-derived constitutional units in the styrene-butadiene rubber were 15% and 30%, respectively, when the amounts were measured by FT-IR (Solution method/Hampton method). The Mooney viscosity ML1+4 (100°C) of the styrene-butadiene rubber was 62.

### [Examples 5 to 9, Comparative Example 4]

### (Production of Crumbs)

Crumb C was produced using a crumb producing apparatus 100 (see FIG. 1) and a nozzle 121 having an inner diameter of 8 inches (see FIGS. 2A and 2B).

First, the superheated steam S₁ (or saturated steam), the rubber solution R, and the hot water W were supplied to the nozzle 121 of the desolvation tank 120. Specifically, under the following conditions, the rubber solution R and the superheated steam S₁ were supplied in the vertical direction and the horizontal direction, respectively, into the hot water W flowing in the horizontal direction, so that the rubber solution R and the superheated steam S₁ were brought into contact with each other to obtain a slurry in which crumb C was dispersed (see FIGS. 2A and 2B) .
Supply amount of the rubber solution R per unit time: 13.46 t/h
Flow velocity of the hot water W: 0.52 m/s
Supply amount of the hot water W per unit time: 61.11 t/h
Content of dispersant in the hot water W: 10 ppm
Dispersant: Polyoxyethylene-polyoxypropylene condensate having a cloud point of 58°C

Here, the temperature of the hot water W [°C], the temperature of the steam [°C], the pressure [MPa], the type, and the supply amount per unit time [t/h] were set to the values described in the hot water condition and the steam condition (see Table 3).

Next, after the slurry in which the crumb C was dispersed was transferred to the desolvation tank 120, the heat retaining steam S₂ having a temperature of 143°C and a pressure of 0.29 MPa was supplied to the tank at 2.3 t/h, and a portion of the solvent was evaporated by the steam stripping method. At this time, the temperature inside the desolvation tank 120 was set to 108°C.

Next, after the slurry in which a portion of the solvent was evaporated was transferred to the desolvation tank 140, a heat retaining steam S₂ was supplied to the tank in the same manner as the desolvation tank 120, and a portion of the solvent was evaporated by the steam stripping method.

Next, after the slurry in which a portion of the solvent was evaporated was transferred to the desolvation tank 150, the heat retaining steam S₂ was supplied to the tank in the same manner as in the desolvation tank 120, and the residual solvent was evaporated by the steam stripping method. Then, a hot water slurry in which crumb C was dispersed was prepared.

Next, a hot water slurry in which the crumb C was dispersed was separated using a plain weave screen 160 having 0.5 mm openings in which the screen was provided at an inclination angle of 60°. As a result, the serum water was collected in the serum water tank 170 and the crumb C was collected in the crumb tank 180.

### (Production of bale)

The crumb C collected in the crumb tank 180 was transferred to a plain weave vibrating screen having 0.5 mm openings in which the screen was provided at an inclination angle of 0°. The crumb C was then crushed and dehydrated using a screw press type dehydrator.

Next, the dehydrated crumb C was extruded at 70 rpm and dried using an expansion type extruder having an inner diameter of 14 inches. Here, a die having 60 round-shaped nozzles having a diameter of 9 mm was provided at the exit of the expansion type extrusion dryer, and the extruded crumb C was cut by a cutter rotating at 400 rpm.

Next, the shredded crumb C was dried using a vibration dryer. At this time, the residence time in the vibration dryer was adjusted to be about 5 minutes. Further, the vibration dryer was divided into seven sections, and the temperatures of the seven sections were set to 80°C, 100°C, 100°C, 100°C, 90°C, 80°C, and 40°C in the order in which the shredded crumb C was conveyed.

Next, the dried crumb C was formed into a bale using a rectangular parallelepiped mold.

Table 3 shows the production status of crumbs and the evaluation results of the properties of the bales.

**[Table 3]**

| | | Examples | | | | | Comparative Examples |
|---|---|---|---|---|---|---|---|
| | | 5 | 6 | 7 | 8 | 9 | 4 |
| Condition of warm water | Temperature[°C] | 80 | 80 | 80 | 80 | 50 | 80 |
| Condition of steam | Temperature[°C] | 195.1 | 195.1 | 195.1 | 205 | 195.1 | 143 |
| | Pressure[MPa] | 1.09 | 1.09 | 1.20 | 1.20 | 1.09 | 0.30 |
| | Type | Superheated steam | | | | | saturated steam |
| | Supply amount per unit time [t/h] | 6.85 | 5.31 | 5.10 | 4.85 | 7.92 | 12.5 |
| Production status of crumb | Clogging of transfer pipe | Δ | ⊚ | ⊚ | ⊚ | ○ | Δ |
| | Clogging of screen | ○ | ⊚ | ⊚ | ⊚ | ○ | × |
| Properties of bale | Colored foreign substances | 3 | 4 | 5 | 5 | 4 | 1 |
| | Amount of residual solvent [ppm] | 900 | 350 | 210 | 10 | 300 | 1600 |
| | Volatile content [mass%] | 0.92 | 0.55 | 0.43 | 0.36 | 0.85 | 1.1 |

Table 3 showed that the generation of clogging of the screen and coloring of the bales were suppressed in Examples 5 to 9.

On the other hand, the generation of clogging of the screen and coloring of the bale were observed in Comparative Example 4, since the saturated steam was used in this comparative example.

Although the embodiments and Examples of the present invention have been described above, the present invention is not limited to specific embodiments and examples, and various modifications and alterations may be made within the scope of the invention described in the claims.

This application is based on and claims priority of Japanese Patent Application No. 2018-062960 filed March 28, 2018, the entire contents of which are hereby incorporated by reference.

### DESCRIPTION OF THE REFERENCE NUMERALS

- 100:: Crumb producing apparatus
- 110:: Rubber solution tank
- 111, 122, 141, 151, 171, 181:: Stirrer
- 112, 123, 142, 152, 172, 182:: Pumps
- 120, 140, 150:: Desolvation tanks
- 121, 121A:: Nozzles
- 121a:: Hot water supplying part
- 121b:: Superheated steam supplying part
- 121c:: Rubber solution supplying part
- 130:: Condenser
- 160:: Screen
- 170:: Serum water tank
- 180:: Crumb tank
- C:: Crumbs
- R:: Rubber solution
- S1:: Superheated steam
- S2:: Heat retaining steam
- W:: Hot water

## Claims

1. A method for producing crumb comprising:
supplying a rubber solution and superheated steam to hot water flowing in a predetermined direction to bring the rubber solution and the superheated steam into contact with each other.

2. The method for producing crumb according to Claim 1, wherein the hot water contains a dispersant.

3. The method for producing crumb according to Claim 1 or 2, comprising:
flowing the hot water in a horizontal direction;
supplying the rubber solution in the vertical direction or an acute direction with respect to the flowing direction of the hot water; and
supplying the superheated steam in the flowing direction of the hot water.

4. The method for producing crumb according to any one of Claims 1 to 3,
wherein the superheated steam has a temperature of 140 to 300°C and a pressure of 0.4 to 10 MPa.

5. The method for producing crumb according to any one of Claims 1 to 4,
wherein the hot water has a temperature of 70°C or more and a flow rate of 0.1 to 10 m/s.

6. A method for producing a bale comprising a step of producing crumb by the method for producing crumb according to any one of Claims 1 to 5.
